# FASCICULE DE BREVET EUROPEEN

(11) **EP 1 873 896 B1**
(45) Date de publication et mention de la délivrance du brevet: **10.01.2018**
(21) Numéro de dépôt: 07354031.2
(22) Date de dépôt: 25.05.2007
(51) Int. Cl.: H02M 3/28, H02J 9/06, H02M 7/10

(54) **Dispositif de conversion électrique, convertisseur et alimentation électrique sans interruption comportant un tel dispositif**
Stromumwandlungsvorrichtung, Wandler und unterbrechungsfreie Stromversorgung, die eine solche Vorrichtung umfasst
Electrical conversion device, converter and uninterruptible power supply comprising such a device

(30) Priorité: 29.06.2006 FR 0605888
(43) Date de publication de la demande: 02.01.2008
(73) Titulaire: Eaton Power Quality SAS, 38330 Montbonnot-Saint-Martin (FR)
(72) Inventeur: Wang, Miao-Xin c/o Schneider Electric Ind. SAS, 38050 Grenoble Cedex 09 (FR)
(74) Mandataire: Kauffmann, Wolfgang Christian

(56) Documents cités:
- EP-A2- 0 690 553
- US-A- 4 767 978
- AYYANAR R ET AL: "An improved full-ZVS-range hybrid DC-DC converter with low filter requirement capable of adding and subtracting the controlled and uncontrolled sections", POWER ELECTRONICS SPECIALISTS CONFERENCE, 2000. PESC 00. 2000 IEEE 31ST ANNUAL 18-23 JUNE 2000, PISCATAWAY, NJ, USA,IEEE, vol. 1, 18 juin 2000 (2000-06-18), pages 179-184, XP010517235, ISBN: 0-7803-5692-6

## Description

### DOMAINE TECHNIQUE DE L'INVENTION

L'invention concerne un dispositif de conversion d'une tension continue selon le préambule de la revendication 1.

L'invention concerne également un convertisseur d'une tension continue en tension alternative selon le préambule de la revendication 8.

L'invention concerne, en outre, une alimentation électrique sans interruption selon le préambule de la revendication 9.

### ETAT DE LA TECHNIQUE

Les moyens de transformation des dispositifs de conversion de l'art antérieur permettent généralement de transférer une puissance électrique entre l'entrée et la sortie desdits dispositifs, et d'élever ou d'abaisser l'amplitude des impulsions d'une tension pulsée primaire fournie par les premiers moyens de conversion, l'élévation étant fonction d'un rapport de transformation desdits moyens de transformation.

De tels dispositifs de conversion sont souvent utilisés dans les convertisseurs de tension continue en tension alternative, tel que ceux mis en oeuvre dans une alimentation électrique sans interruption ou un onduleur.

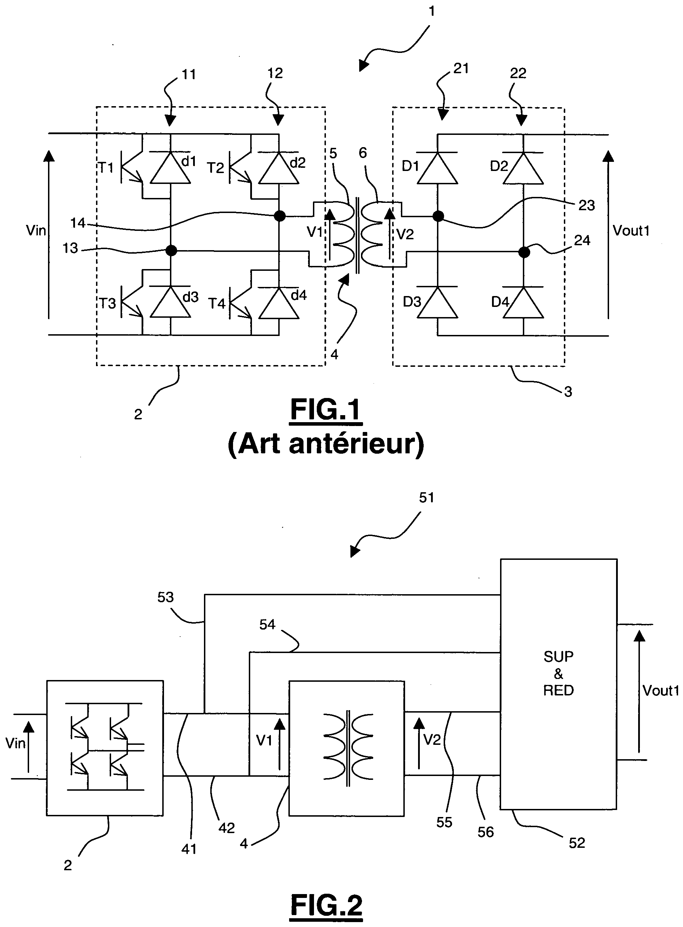

Un exemple de dispositif de conversion d'une tension continue, selon l'art antérieur, est représenté à la figure 1. Le dispositif de conversion représenté peut être également qualifié de dispositif de conversion du type courant continue - courant continue, en anglais direct current - direct current ou en abrégé DC - DC . Plus spécifiquement, le dispositif de conversion d'une tension continue représenté permet de convertir une tension continue Vin en tension de sortie Vout1 pulsée et redressée. Le document US 4767978 montre les caractéristiques du préambule de la revendication 1.

Le dispositif de conversion 1 comprend des premiers moyens de conversion 2, des moyens de redressement 3, et des moyens de transformation 4. Les moyens de transformations 4 comprennent, quant à eux, un transformateur comportant aux moins un enroulement primaire 5 connecté aux premiers moyens de conversion et au moins un enroulement secondaire 6 connecté aux moyens de redressement.

Les premiers moyens de conversion 2 comportent deux branches de transistors 11 et 12, en l'occurrence un pont de transistors, pour convertir la tension continue Vin en une tension pulsée primaire V1 sur l'enroulement primaire du transformateur. Chaque branche de transistors comporte au moins deux transistors montés en série. Dans le cas représenté à la figure 1, la branche 11 comporte deux transistors T1 et T3, et la branche 12 comporte deux transistors T2 et T4. Les points milieu 13 et 14, respectivement des branches 11 et 12, sont connectés aux extrémités de l'enroulement primaire 5 du transformateur 4. Les premiers moyens de conversion 2 comportent également des moyens de redressement, en l'occurrence des diodes d1, d2, d3 et d4 montées en parallèle et en inverse respectivement sur les transistors T1, T2, T3 et T4. Les diodes d1 à d4 protègent les transistors et rendent les premiers moyens de conversion réversibles, c'est à dire qu'elles permettent, dans un autre mode réversible, le redressement d'une tension pulsée.

Les moyens de redressement 3 comportent quatre diodes D1, D2, D3 et D4 pour convertir une tension pulsée secondaire V2 sur l'enroulement secondaire 6 du transformateur 4 en tension de sortie Vout1 pulsée et redressée. Les diodes sont disposées sur deux branches 21 et 22, chacune des branches 21 et 22 comportant au moins deux diodes montées en série et dans le même sens. Dans le cas représenté à la figure 1, la branche 21 comporte deux diodes D1 et D3, et la branche 22 comporte deux diodes D2 et D4. Les points milieu 23 et 24, respectivement des branches 21 et 22, sont connectés aux extrémités de l'enroulement secondaire 6 du transformateur 4.

Dans un tel dispositif de conversion d'une tension continue selon l'art antérieur, le transformateur 4 transfère l'ensemble de la puissance entre les premiers moyens de conversion 2 et les moyens de redressements 3. Dans un tel dispositif de conversion, les composants électroniques des premiers moyens de conversion et des moyens de redressement encaissent l'ensemble de la puissance transférée. Ceci peut se traduire par des déperditions thermiques significatives et peut exiger la mise en oeuvre de moyens de dissipation thermique encombrants.

US4767978 décrit un convertisseur courant continu- courant continu dans une sonde de puits.

### EXPOSÉ DE L'INVENTION

L'invention vise à remédier aux inconvénients des dispositifs de conversion de l'art antérieur.

L'invention concerne un dispositif de conversion d'une tension continue selon la revendication 1.

Le dispositif selon l'invention peut comprendre l'une quelconque des caractéristiques des revendications 2 à 7.

L'invention concerne également un convertisseur d'une tension continue en tension alternative selon la revendication 8.

L'invention concerne également une alimentation électrique sans interruption selon la revendication 9.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente un dispositif de conversion d'une tension continue selon l'art antérieur.
La figure 2 représente un mode de réalisation du dispositif de conversion d'une tension continue selon l'invention.
La figure 3 représente, de manière plus détaillée, un dispositif de conversion d'une tension continue selon l'invention.
La figure 4 montre les éléments du dispositif de conversion qui sont traversés par un courant, lorsque les transistors T1 et T4 des premiers moyens de conversion sont passants.
La figure 5 montre les éléments du dispositif de conversion qui sont traversés par un courant, lorsque les transistors T2 et T3 des premiers moyens de conversion sont passants.
La figure 6 représente schématiquement une alimentation sans interruption comprenant un convertisseur d'une tension continue en tension alternative équipé d'un dispositif de conversion.
Les figures 7A à 7E représentent des graphes illustrant le fonctionnement du dispositif de conversion selon l'invention selon un mode élévateur/abaisseur de tension.
Les figures 8A à 8E représentent des graphes illustrant le fonctionnement du dispositif de conversion selon l'invention selon un mode conditionneur de tension.

### DESCRIPTION DETAILLÉE DE MODES DE RÉALISATION PRÉFÉRÉS

Le dispositif de conversion 51 représenté à la figure 2 comporte des premiers moyens de conversion 2 pour fournir, à partir de la tension continue Vin, une tension pulsée primaire V1. Par tension pulsée, on entend une tension comportant des impulsions de n'importe quelle largeur. Dans le cas de la tension pulsée primaire V1, le signe des impulsions change alternativement. Le dispositif de conversion 51 comporte également des moyens de transformation 4 pour fournir une tension pulsée secondaire V2 à partir de la tension pulsée primaire V1. Les moyens de transformation sont connectés aux premiers moyens de conversion par l'intermédiaire des conducteurs 41 et 42.

Selon un des aspects de l'invention, le dispositif de conversion 51 comprend des moyens de superposition et de redressement 52 pour fournir une tension de sortie Vout1 pulsée et redressée, à partir de la tension pulsée secondaire V2 et de la tension pulsée primaire V1. A cet effet, les moyens de superposition et de redressement 52 sont connectés aux premiers moyens de conversion 2, par l'intermédiaire des conducteurs 53 et 54, et aux moyens de transformation, par l'intermédiaire des conducteurs 55 et 56.

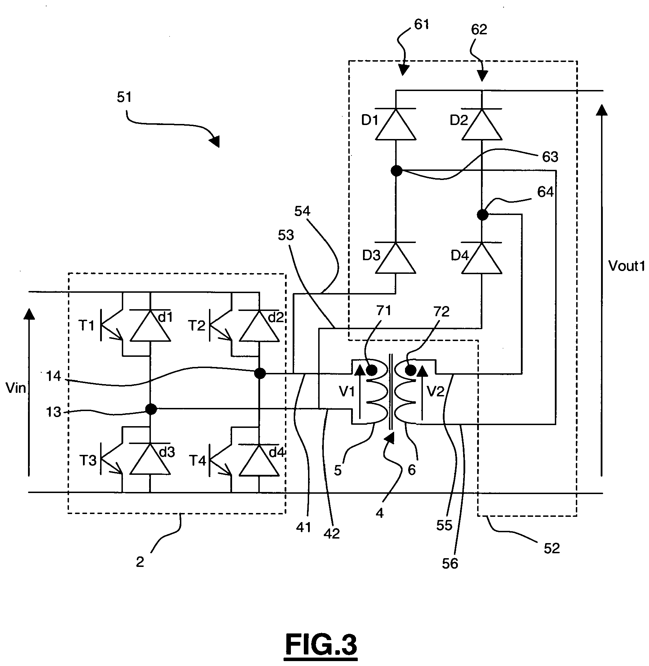

Le dispositif de conversion 51 d'une tension continue Vin, représenté à la figure 3, comprend des éléments déjà représentés à la figure 2, c'est à dire les premiers moyens de conversion 2, des moyens de transformation 4 connectés aux premiers moyens de conversion par les conducteurs 41 et 42, des moyens de redressement et de superposition 52 connectés aux moyens de transformation par les conducteurs 55 et 56 et connectés aux premiers moyens de conversion par les conducteurs 53 et 54.

Les moyens de transformation 4 comportent un transformateur comportant un enroulement primaire 5 connecté aux premiers moyens de conversion par les conducteurs 41 et 42, et un enroulement secondaire 6 connecté aux moyens de redressement et de superposition par l'intermédiaire des conducteurs 55 et 56.

Comme dans le cas représenté à la figure 1, les premiers moyens de conversion 2 comportent deux branches de transistors T1, T2, T3 et T4. Les transistors peuvent être, par exemple, de type bipolaire, de type MOS, de type à effet de champ, ou de type IGBT. Les points milieux 13 et 14 sont connectés à chacune des extrémités de l'enroulement primaire 5 du transformateur 4 par l'intermédiaire des conducteurs 41 et 42. Les points milieux 13 et 14 sont également connectés à des premières entrées des moyens de superposition et de redressement, via les conducteurs 53 et 54. La tension V1 sur l'enroulement primaire 5, est une tension pulsée convertie à partir de la tension continue Vin. Les premiers moyens de conversion 2, tels qu'ils sont représentés à la figure 3, comportent également des moyens de redressement, en l'occurrence des diodes d1, d2, d3 et d4 montées en parallèle et en inverse sur respectivement les transistors T1, T2, T3 et T4. Les diodes d1 à d4 protègent les transistors et rendent les premiers moyens de conversion réversible. Les diodes permettent ainsi de redresser une tension pulsée présentant des alternances de signe opposé.

Les moyens de redressement et de superposition 52 comportent deux branches 61 et 62 de diodes D1, D2, D3 et D4. La branche 61 comporte deux diodes D1 et D3 montées en série et dans le même sens. De la même façon, la branche 62 comporte deux diodes D2 et D4 montées en série et dans le même sens. Les points milieux 63 et 64, respectivement des branches 61 et 62, constituent des deuxièmes entrées des moyens de superposition et de redressement et sont connectés aux extrémités de l'enroulement secondaire 6. La tension de sortie Vout1 des moyens de redressement et de superposition 52 est une tension pulsée redressée. Par tension pulsée redressée, on entend une tension comportant des impulsions positives de largeur quelconque.

Dans le dispositif de conversion 51 représenté à la figure 3, les extrémités de l'enroulement primaire 5 du transformateur 4 sont connectées aux premières entrées des moyens de redressement et de superposition 52 par l'intermédiaire des conducteurs 53 et 54. Plus précisément, l'extrémité de l'enroulement primaire, connectée au point milieu 13, est également connectée à l'une des premières entrées que constitue l'extrémité entrante de la branche 62, par l'intermédiaire du conducteur 53. De la même façon, l'extrémité de l'enroulement primaire, connectée au point milieu 14 du pont de transistor, est également connectée à l'une des premières entrées que constitue l'extrémité entrante de la branche 61, par l'intermédiaire d'un conducteur 54. Ainsi, les moyens de redressement et de superposition 52 sont alimentés d'une part, par la tension pulsée secondaire V2 sur l'enroulement secondaire 6 et, d'autre part, par la tension pulsée primaire V1 sur l'enroulement primaire 5.

Par ailleurs, dans le dispositif de conversion 51 représenté à la figure 3, le sens de bobinage de l'enroulement primaire 5, symbolisé par le point 71, est le même que le sens de bobinage de l'enroulement secondaire 6 symbolisé par le point 72. Le fait que les sens de bobinage des enroulements primaire et secondaire sont identiques est représenté par la présence des points 71 et 72 sur une même extrémité du noyau magnétique du transformateur.

Dans le dispositif de conversion 51 représenté à la figure 3, la puissance électrique transmise entre les premiers moyens de conversion 2 et les moyens de redressement et de superposition 52 est transmise par les moyens de transformation 4 ainsi que par les conducteurs 53 et 54. La partie de la puissance transmise par les moyens de transformation est donc réduite par rapport au dispositif de conversion de l'art antérieur représenté à la figure 1. De ce fait, il n'est pas nécessaire de choisir des composants électroniques et des moyens de transformation dimensionnés pour encaisser la totalité de la puissance transmise entre l'entrée et la sortie, comme cela était le cas avec le dispositif de conversion selon l'art antérieur. La taille des composants, en l'occurrence des transistors et des diodes, et des moyens de transformation est donc réduite.

Cet avantage du dispositif de conversion de l'invention peut être évalué en comparant le niveau de puissance encaissé par chaque composant électronique du dispositif de conversion 51 conforme à l'invention, par rapport au niveau de puissance encaissé par ce même composant dans le dispositif de conversion équivalent, selon l'art antérieur. Pour ce faire, il est possible de déterminer, pour chaque composant, qu'elle est la tension maximale Vmax et l'intensité maximale Imax subies par ledit composant. Généralement, la tension maximale Vmax correspond à la tension quand ledit courant ne circule pas dans le composant. A partir de la tension maximale Vmax et de l'intensité maximale Imax, une contrainte de puissance peut être déterminée. Cette dernière peut être définie comme étant le rapport du produit de la tension maximale Vmax par l'intensité maximale Imax, sur la puissance maximale transmise Pmax.

De la même façon, il est possible de comparer le niveau de puissance encaissé par les moyens de transformation, en déterminant la tension maximale Vmax et l'intensité maximale Imax sur l'enroulement secondaire du transformateur. De la même façon que pour les composants électroniques, une contrainte de puissance peut être déterminée à partir de la tension maximale et de l'intensité maximale. De la même façon, la contrainte de puissance du transformateur peut être définie comme étant le rapport du produit de la tension maximale Vmax par l'intensité maximale Imax, sur la puissance maximale transmise Pmax.

Ainsi, la contrainte de puissance peut être déterminée pour chaque composant et pour le transformateur, dans le cas du dispositif de l'art antérieur représenté à la figure 1, et dans le cas du dispositif conforme à l'invention équivalent représenté à la figure 3.

Les tensions et les intensités maximales, ainsi que la contrainte de puissance, peuvent être exprimées en fonction :
- de la tension continue Vin d'entrée du dispositif de conversion,
- de l'intensité du courant de sortie Iout due ce même dispositif, et
- du rapport de transformation du transformateur.

Dans ce qui suit, il a été posé que le rapport de transformation des moyens de transformation 4, c'est à dire le rapport entre le nombre de spires de l'enroulement secondaire sur le nombre de spires de l'enroulement primaire, est égal à R1, pour le dispositif de la figure 1, et est égal à R2 pour le dispositif de la figure 3.

### Contraintes de puissance des composants et du transformateur du dispositif de la figure 1 :

La puissance transmise par le dispositif de conversion représenté à la figure 1, selon l'art antérieur, est sensiblement égale au produit de la tension continue d'entrée Vin par le courant d'entrée, c'est à dire sensiblement égale au produit de la tension continue d'entrée Vin par le courant de sortie Iout et par le rapport de transformation R1.

La tension maximale Vmax sur chacun des transistors T1, T2, T3 et T4 des premiers moyens de conversion 2 est sensiblement égale à la tension continue Vin. En effet, lorsque l'un des transistors, sur chacune des branches 11 et 12 de transistors, conduit, l'autre transistor est bloqué, et est donc soumis à la tension continue Vin à l'entrée du dispositif de conversion.

L'intensité maximale Imax dans chacun des transistors T1, T2, T3 et T4 des premiers moyens de conversion est, quant à elle, sensiblement égale au produit du rapport de transformation R1 par l'intensité de sortie Iout du dispositif de conversion. En effet, lorsque l'un des transistors conduit, l'intensité dans ledit transistor est égale à l'intensité dans l'enroulement primaire 5. Par ailleurs, cette intensité est égale au produit du rapport de transformation R1 par l'intensité dans l'enroulement secondaire 6, cette dernière étant égale à l'intensité de sortie Iout du dispositif de conversion.

La tension maximale Vmax sur chacune des diodes D1, D2, D3 et D4 des moyens de redressement 3 est sensiblement égale au produit de la tension continue d'entrée Vin par le rapport de transformation R1. L'intensité maximale Imax dans chacune des diodes D1, D2, D3 et D4 des moyens de redressement 3 est, quant à elle, sensiblement égale à l'intensité de sortie Iout.

La tension maximale Vmax sur l'enroulement secondaire du transformateur est sensiblement égale au produit du rapport de transformation R1 par la tension continue d'entrée Vin. L'intensité maximale Imax du transformateur est, quant à elle, sensiblement égale à l'intensité de sortie Iout.

A partir de la tension maximale Vmax et de l'intensité maximale Imax déterminées ci-dessus, la contrainte de puissance peut être déterminée pour chacun des composants et pour le transformateur. Dans le cas du dispositif de conversion de la figure 1, selon l'art antérieur, les contraintes de puissance de chaque composant et du transformateur sont sensiblement égales à l'unité.

Les tensions et les intensités maximales, ainsi que les contraintes de puissance, des composants et du transformateur du dispositif de conversion de la figure 1, selon l'art antérieur, sont présentées dans la première colonne du tableau 1 ci-dessous.

### Contraintes de puissance des composants et du transformateur du dispositif de la figure 3 :

La puissance transmise par le dispositif de conversion représenté à la figure 3, conforme à l'invention, est sensiblement égale au produit de la tension continue d'entrée Vin par la somme des courants dans les enroulements primaire et secondaire, c'est à dire sensiblement égale au produit de la tension continue d'entrée Vin par le courant de sortie Iout et par la somme du rapport de transformation R2 et de l'unité.

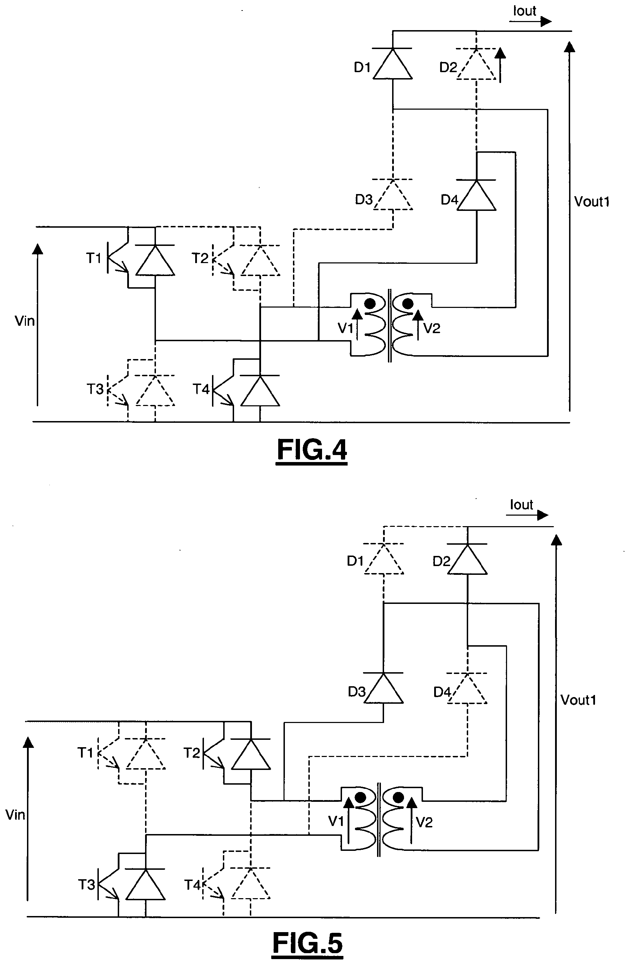

Lorsque les transistors T1 et T4 des premiers moyens de conversion 2 sont passants, le dispositif de conversion 51 peut être représenté par le circuit de la figure 4, dans lequel les éléments qui ne conduisent pas sont représentés en pointillés. Dans ce cas particulier, les diodes D2 et D3 ne conduisent pas.

En se référant à la figure 4, dans le cas où les transistors T1 et T4 sont passants, l'intensité maximale Imax dans le transistor T1 est sensiblement égale à la somme des courants dans l'enroulement primaire et dans l'enroulement secondaire, c'est à dire sensiblement égale au produit de la somme du rapport de transformation et de l'unité (1+R2) par le courant de sortie Iout. L'intensité maximale Imax dans le transistor T4 est, quant à elle, sensiblement égale au courant dans l'enroulement primaire, c'est à dire sensiblement égale au produit du rapport de transformation R2 par l'intensité de sortie Iout. Les intensités maximales Imax dans les diodes D1 et D4, ainsi que l'intensité maximale Imax dans l'enroulement secondaire du transformateur, sont sensiblement égales à l'intensité de sortie Iout.

En se référant à la figure 4, dans le cas où les transistors T1 et T4 sont passants, les tensions maximales Vmax sur les transistors T2 et T3 sont sensiblement égales à la tension continue d'entrée Vin. Les tensions maximales Vmax sur les diodes D2 et D3, ainsi que la tension maximale Vmax sur l'enroulement secondaire du transformateur, sont sensiblement égales à la tension sur l'enroulement secondaire V2, c'est à dire au produit du rapport de transformation R2 par la tension continue Vin d'entrée.

Lorsque les transistors T2 et T3 des premiers moyens de conversion 2 sont passants, le dispositif de conversion 51 peut être représenté par le circuit de la figure 5, dans lequel les éléments qui ne conduisent pas sont représentés en pointillés. Dans ce cas particulier, les diodes D1 et D4 ne conduisent pas.

En se référant à la figure 5, dans le cas où les transistors T2 et T3 sont passants, l'intensité maximale Imax dans le transistor T2 est sensiblement égale à la somme des courants dans l'enroulement primaire et dans l'enroulement secondaire, c'est à dire sensiblement égale au produit de la somme du rapport de transformation et de l'unité (1+R2) par l'intensité de sortie Iout. L'intensité maximale Imax dans le transistor T3 est, quant à elle, sensiblement égale au courant dans l'enroulement primaire, c'est à dire sensiblement égale au produit du rapport de transformation R2 par l'intensité de sortie Iout. Les intensités maximales Imax des diodes D2 et D3 sont sensiblement égales à l'intensité de sortie Iout.

En se référant à la figure 5, dans le cas où les transistors T2 et T3 sont passants, les tensions maximales Vmax sur les transistors T1 et T4 sont sensiblement égales à la tension continue d'entrée Vin. Les tensions maximales Vmax sur les diodes D1 et D4 sont sensiblement égales à la tension sur l'enroulement secondaire V2, c'est à dire au produit du rapport de transformation R2 par la tension continue d'entrée Vin d'entrée.

A partir de la tension maximale Vmax et de l'intensité maximale Imax déterminée ci-dessus, la contrainte de puissance peut être déterminée pour chacun des composants et pour le transformateur. Dans le cas du dispositif de conversion de la figure 3, conforme à l'invention, les contraintes de puissance de la plupart des composants et du transformateur sont sensiblement égales au rapport entre le rapport de transformation R2 et la somme du rapport de transformation R2 et de l'unité, à l'exception des transistors T1 et T2.

Les tensions et les intensités maximales, ainsi que les contraintes de puissance, des composants et du transformateur du dispositif de conversion de la figure 3, conforme à l'invention, sont présentées dans la seconde colonne du tableau 1 ci-dessous.

**Tableau 1**

| | **Topologie selon l'art antérieur (****figure 1****)** | **Topologie conforme à l'invention (****figure 3****)** |
|---|---|---|
| **Tension d'entrée** | Vin | Vin |
| **Courant de sortie** | Iout | Iout |
| **Rapport de transformation** | R1 | R2 |
| **Puissance transmise (Pmax)** | R1*Vin*Iout | (1+R2)*Vin*Iout |

| **Contraintes sur transistors T1 et T2** | | |
|---|---|---|
| **Vmax** | Vin | Vin |
| **Imax** | R1 *Iout | (1+R2)*Iout |
| **Vmax*Imax / Pmax** | 1 | 1 |

| **Contraintes sur transistors T3 et T4** | | |
|---|---|---|
| **Vmax** | Vin | Vin |
| **Imax** | R1*Iout | R2*Iout |
| **Vmax*Imax / Pmax** | 1 | R2/(1+R2) |

| **Contraintes sur transformateur** | | |
|---|---|---|
| **Vmax** | R1*Vin | R2*Vin |
| **Imax** | Iout | Iout |
| **Vmax*Imax / Pmax** | 1 | R2/(1 +R2) |

| **Contraintes sur diodes D1, D2, D3 et D4** | | |
|---|---|---|
| **Vmax** | R1*Vin | R2^{*}Vin |
| **Imax** | Iout | Iout |
| **Vmax*Imax / Pmax** | 1 | R2/(1+R2) |

Les contraintes de puissance du transformateur et de la plupart des composants du dispositif de conversion de la figure 3, conforme à l'invention, sont inférieures à 1. Ainsi, le niveau de puissance encaissé par la plupart des composants et par le transformateur du dispositif conforme à l'invention, est donc généralement réduit par rapport au dispositif selon l'art antérieur.

Le dispositif de conversion d'une tension continue selon l'invention peut être intégré dans un convertisseur d'une tension continue en tension alternative. Le dispositif de conversion d'une tension continue selon l'invention peut être également intégré dans une alimentation sans interruption, ou dans le convertisseur d'une tension continue en tension alternative d'une telle alimentation sans interruption.

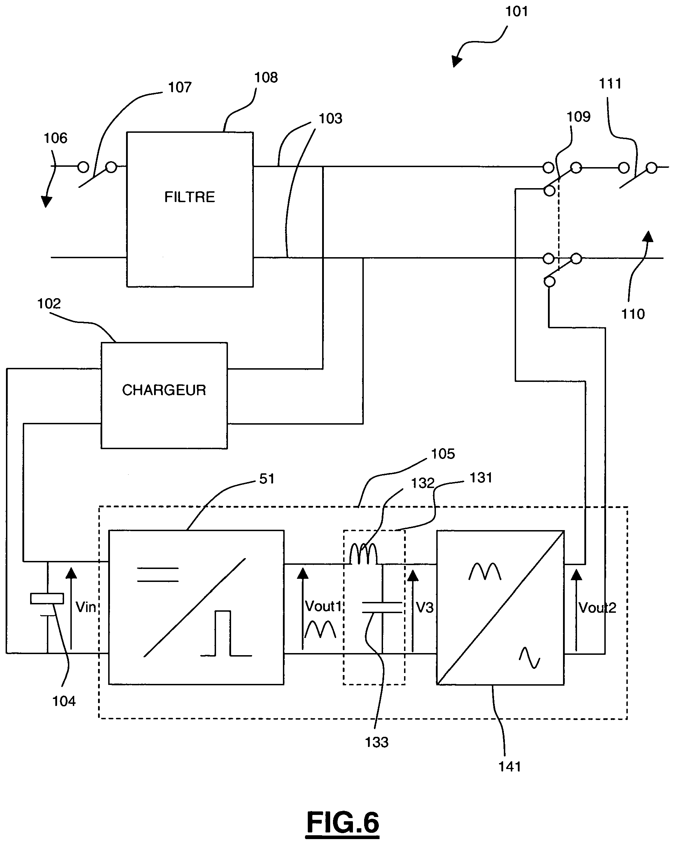

Une telle alimentation sans interruption est représentée à la figure 6. L'alimentation sans interruption 101 comporte un chargeur 102 connecté, d'un côté, à un réseau de distribution 103 et, de l'autre côté, à une batterie d'accumulateur 104. Quand l'alimentation sans interruption fonctionne dans un mode de charge de la batterie, cette dernière est chargée par l'intermédiaire du chargeur 102. L'alimentation sans interruption 101 comporte également un convertisseur d'une tension continue Vin en tension alternative, référencé 105. Ce convertisseur 105 est connecté, d'un côté, à la batterie 104 et, de l'autre côté, au réseau de distribution 103. Lorsque l'alimentation sans interruption fonctionne dans un mode onduleur, le convertisseur 105 d'une tension continue en tension alternative est destiné à fournir à la sortie 110 une tension alternative. Sur la figure 6, le réseau comporte une ligne d'arrivée 106, un disjoncteur 107, un filtre 108 connecté en série sur au moins un conducteur de la ligne d'arrivée, un commutateur 109 de sortie pour commuter une ligne de sortie 110 sur une tension de la ligne d'entrée ou sur la tension alternative fournie par l'alimentation sans interruption si la ligne d'entrée est défaillante, et un relais 111 de sortie.

Le convertisseur 105 d'une tension continue en tension alternative, représenté à la figure 6, comporte un dispositif de conversion de la tension continue Vin, conforme à un mode de réalisation de l'invention, permettant de convertir la tension continue d'entrée Vin en tension pulsée redressée Vout1. Ce dispositif de conversion, référencé 51, comprend, comme sur la figure 3, des premiers moyens de conversion 2, des moyens de redressement et de superposition 52, et un transformateur 4 comportant aux moins un enroulement primaire 5 connecté aux premiers moyens de conversion et au moins un enroulement secondaire 6 connecté aux moyens de redressement et de superposition. Le convertisseur 105 représenté à la figure 6, comporte également des moyens de filtrage 131, connectés en sortie du dispositif de conversion 51 et permettant de filtrer la tension pulsée redressée Vout1. Ces moyens de filtrage 131 comprennent une inductance 132 montée en série et un condensateur 133 monté en parallèle. Le convertisseur 105 représenté à la figure 6, comporte, en outre, des seconds moyens de conversion 141 connectés, d'un côté, aux moyens de filtrage et, de l'autre côté, au réseau de distribution aval. Ces seconds moyens de conversion permettent, en l'occurrence, de convertir la tension pulsée, redressée et filtrée, en tension alternative.

Le dispositif de conversion 51 représenté à la figure 6 peut être facilement adapté pour fonctionner de manière réversible, c'est à dire pour fonctionner indifféremment en mode onduleur et en mode chargeur. Cette adaptation peut consister à ajouter, aux moyens de superposition et de redressement, des troisièmes moyens de conversion. Ces derniers peuvent être des transistors montés en parallèle et en inverse sur chacune des diodes des moyens de redressement et de superposition 52.

Dans un mode onduleur, les transistors T1 et T4, des premiers moyens de conversion, fonctionnent en alternance avec les transistors T2 et T3, les diodes d1 à d4 montée en parallèles et en inverse sur lesdits transistors étant inactives. Dans ce mode onduleur, les diodes D1 à D4 des moyens de redressement et de superposition 52 permettent de superposer la tension pulsée primaire et la tension pulsée secondaire et de redresser la tension pulsée résultante.

Dans un mode chargeur, les transistors T1 à T4 sont bloqués et les diodes d1 à d4 permettent le redressement d'une tension pulsée à l'aide de transistors, non représentés, montés en parallèle et en inverse sur les diodes D1 à D4.

Le dispositif de conversion selon l'invention peut être adapté pour fonctionner en mode élévateur/abaisseur de tension. Selon ce mode élévateur/abaisseur de tension, le dispositif de conversion permet de convertir une tension continue Vin en une tension de sortie Vout1 pulsée et redressée, de manière à obtenir, après filtrage, une tension continue de valeur plus élevée que la tension continue d'entrée Vin. Dans ce mode de réalisation, les premiers moyens de conversion peuvent être des moyens de conversion basse fréquence. Par basse fréquence, on entend une fréquence ayant le même ordre de grandeur que la fréquence du réseau de distribution.

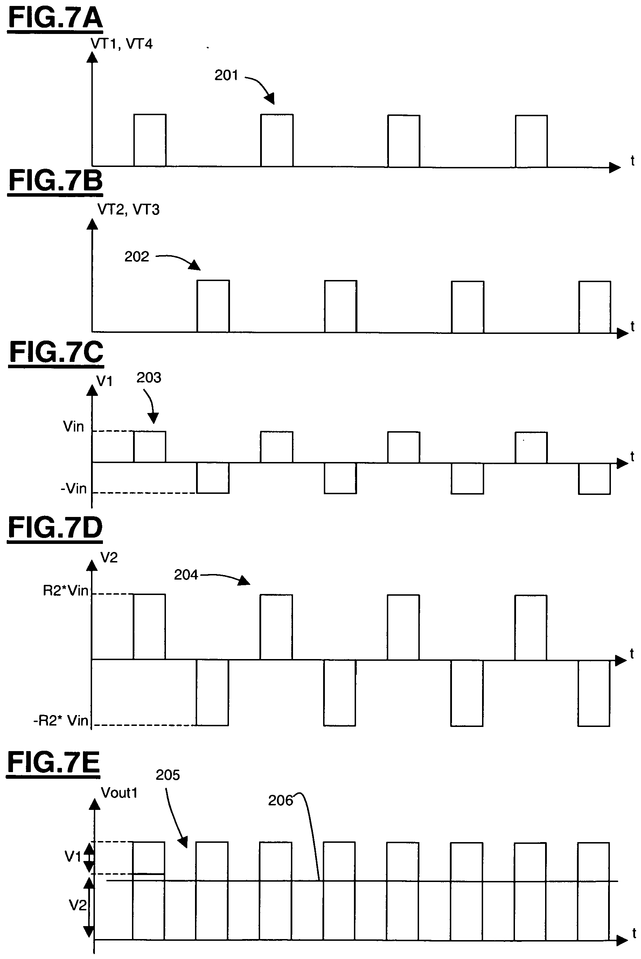

Le fonctionnement en mode élévateur/abaisseur de tension est illustré par les figures 7A à 7E. Les transistors T1 à T4 des premiers moyens de conversion sont commandés de manière à produire, en sortie des premiers moyens de conversions, une tension pulsée primaire V1. Les transistors T1 et T4 fonctionnent en alternance avec les transistors T2 et T3 grâce à des signaux de commande 201 et 202 représentés par les figures 7A et7B. Le pont de transistors des premiers moyens de conversion permet de fournir une tension pulsée primaire V1, représentée par le graphe 203 de la figure 7C, comportant une succession d'impulsions positives et négatives, et ayant une amplitude sensiblement égale à la tension continue d'entrée Vin. A partir de la tension pulsée primaire V1, les moyens de transformation fournissent une tension pulsée secondaire V2, représentée par le graphe 204 de la figure 7D, comportant une succession d'impulsions positives et négatives, et ayant une amplitude sensiblement égale au produit de la tension continue d'entrée Vin par le rapport de transformation R2 des moyens de transformation. A partir de cette tension pulsée secondaire V2, les moyens de redressement et de superposition fournissent une tension de sortie Vout1 pulsée et redressée, représentée par le graphe 205 de la figure 7E. La tension de sortie Vout1 comporte une succession d'impulsions positives ayant une amplitude sensiblement égale à la somme de l'amplitude de la tension pulsée primaire V1 et de l'amplitude de tension pulsée secondaire V2, c'est à dire sensiblement égale au produit de la tension continue d'entrée Vin par la somme du rapport de transformation R2 et de l'unité. Dans le cas représenté à la figure 7E, un filtrage adapté, permet d'obtenir une tension sensiblement continue 206 de valeur plus élevée que la tension continue d'entrée. De cette façon, le dispositif de conversion fonctionne dans un mode élévateur de tension, tout en limitant la puissance dissipée dans le transformateur et dans la plupart des composants dudit dispositif. Dans d'autres cas non représentés, en diminuant le rapport cyclique ou le rapport de modulation de largeur d'impulsion des transistors T1 à T4, le dispositif de conversion peut fonctionner dans un mode abaisseur de tension, c'est à dire pour fournir une tension moyenne plus basse que la tension d'entrée Vin.

Le dispositif de conversion de l'invention peut également être adapté pour fonctionner en mode conditionneur de tension. Selon ce mode conditionneur de tension, le dispositif de conversion permet de convertir une tension continue Vin en une tension de sortie Vout1 pulsée et redressée, de manière à obtenir, après filtrage, des alternances redressées d'une tension sinusoïdale. Ce mode de fonctionnement peut être également qualifié de modulation de largeur d'impulsion. Dans ce mode de réalisation, les premiers moyens de conversion sont, de préférence, des moyens de conversion haute fréquence, c'est à dire ayant une fréquence de fonctionnement de l'ordre du kilohertz.

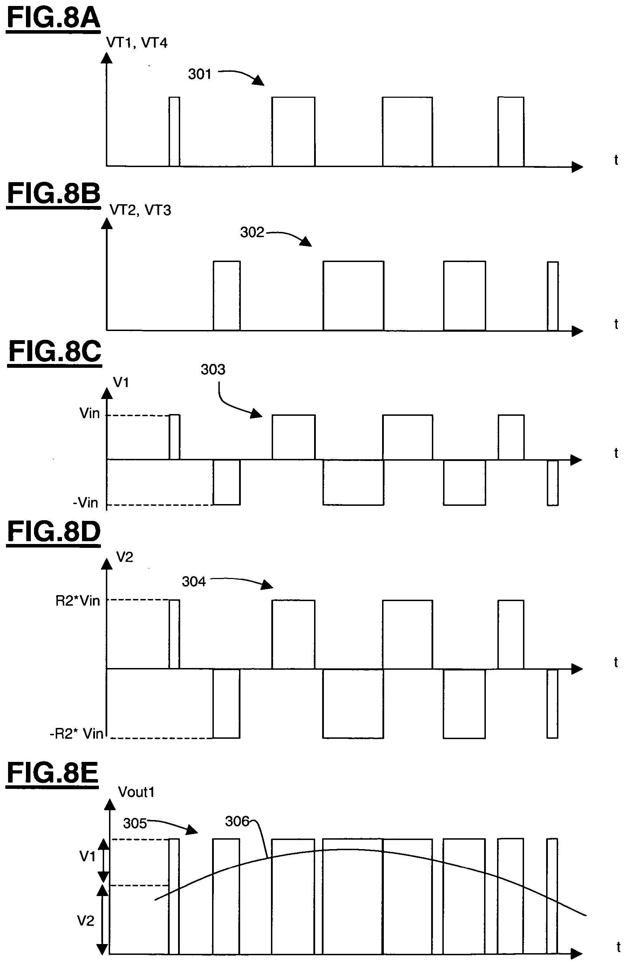

Le fonctionnement en mode conditionneur de tension est illustré par les figures 8A à 8E. De la même façon que dans le mode élévateur/abaisseur de tension, les transistors T1 à T4 des premiers moyens de conversion sont commandés de manière à produire, en sortie des premiers moyens de conversions, une tension pulsée primaire V1. Les transistors T1 et T4 fonctionnent en alternance avec les transistors T2 et T3, grâce à des signaux de commande 301 et 302 représentés par les figures 8A et 8B. A la différence du mode élévateur/abaisseur de tension, la durée des impulsions des signaux de commande 301 et 302 varie, de manière à permettre la reconstitution, après un filtrage adapté, des alternances redressées d'une tension sinusoïdale. De la même façon que dans le mode élévateur/abaisseur de tension, les transistors des premiers moyens de conversion permettent de fournir une tension pulsée primaire V1, représentée par le graphe 303 de la figure 8C, comportant une succession d'impulsions positives et négatives, et ayant une amplitude sensiblement égale à la tension continue d'entrée Vin. De la même façon que dans le mode élévateur/abaisseur de tension, à partir de la tension pulsée primaire V1, les moyens de transformation fournissent une tension pulsée secondaire V2, représentée par le graphe 404 de la figure 8D, comportant une succession d'impulsions positives et négatives, et ayant une amplitude sensiblement égale au produit de la tension continue d'entrée Vin par le rapport de transformation R2 des moyens de transformation. A partir de cette tension pulsée secondaire V2, les moyens de redressement et de superposition fournissent une tension pulsée redressée Vout1, représentée par le graphe 305 de la figure 8E. La tension de sortie Vout1 pulsée et redressée comporte une succession d'impulsions positives ayant une amplitude sensiblement égale à la somme de l'amplitude de la tension pulsée primaire V1 et de l'amplitude de la tension pulsée secondaire V2, c'est à dire sensiblement égale au produit de la tension continue d'entrée Vin par la somme du rapport de transformation R2 et de l'unité. Les variations de durée des impulsions permettent d'obtenir, après un filtrage adapté, une tension sinusoïdale redressée 306. De cette façon, le dispositif de conversion fonctionne dans un mode conditionneur de tension, tout en limitant la puissance dissipée dans le transformateur et dans la plupart des composants dudit dispositif.

Le dispositif de conversion d'une tension continue selon l'invention est généralement du type « forward ». De surcroît, il permet d'obtenir un transfert d'énergie quasiment continu et alterné.

Un avantage de l'invention est de proposer un dispositif de conversion d'une tension continue comportant des composants et des moyens de transformation présentant des contraintes de puissance réduites, par rapport à la puissance transmise par ledit dispositif.

Un autre avantage de l'invention est de proposer un dispositif de conversion d'une tension continue comportant des composants et des moyens de transformation ayant une taille réduite.

Encore un autre avantage de l'invention est de limiter les déperditions de chaleur par les composants et par le transformateur du dispositif de conversion.

## Revendications

1. Dispositif de conversion (51) d'une tension continue (Vin) comprenant :
- des premiers moyens de conversion (2) pour recevoir la tension continue et pour fournir une tension pulsée primaire (V1), et
- des moyens de transformation (4) connectés aux premiers moyens de conversion pour fournir une tension pulsée secondaire (V2),
le dispositif comprenant des moyens de superposition et de redressement (52) de tensions primaire et secondaire pour fournir une tension de sortie (Vout1) pulsée et redressée, lesdits moyens de superposition et de redressement étant connectés aux premiers moyens de conversion et à la sortie des moyens de transformation, **caractérisé en ce que** ladite tension de sortie (Vout1) comprend des impulsions ayant des amplitudes sensiblement égales à la somme des amplitudes des impulsions de la tension pulsée primaire (V1) et de la tension pulsée secondaire (V2).

2. Dispositif selon la revendication 1, **caractérisé en ce qu'**au moins un conducteur (53, 54) en sortie des premiers moyens de conversion (2) est connecté aux moyens de superposition et de redressement (52).

3. Dispositif selon l'une des revendications 1 ou 2, **caractérisé en ce que** les premiers moyens de conversion (2) sont des moyens de conversion basse fréquence ou haute fréquence.

4. Dispositif selon l'une des revendications 1 à 3, **caractérisé en ce que** les moyens de transformation (4) comportent aux moins un enroulement primaire (5) connecté à la sortie des premiers moyens de conversion (2) et au moins un enroulement secondaire (6) connecté à l'entrée des moyens de superposition et de redressement (52), le sens de bobinage de l'enroulement primaire du transformateur étant le même que celui de l'enroulement secondaire.

5. Dispositif selon l'une des revendications 1 à 4, **caractérisé en ce que** les premiers moyens de conversion (2) comportent deux branches (11, 12) de transistors (T1, T2, T3 et T4) sur lesquelles sont montés en série au moins deux transistors, le point milieu (13, 14) de chaque branche étant connecté à l'entrée des moyens de transformation (4) et à des premières entrées des moyèns de superposition et de redressement (52).

6. Dispositif selon l'une des revendications 1 à 5, **caractérisé en ce que** les moyens de superposition et de redressement (52) comportent deux branches (61, 62) de diodes (D1, D2, D3 et D4), chaque branche comportant au moins deux diodes montées en série dans le même sens, le point milieu (63, 64) de chaque branche étant connecté à la sortie des moyens de transformation (4).

7. Dispositif selon la revendication 6, **caractérisé en ce que** les extrémités entrantes de chaque branche sont connectées à la sortie des premiers moyens de conversion (2).

8. Convertisseur (105) d'une tension continue (Vin) en tension alternative (Vout2) comprenant :
- un dispositif de conversion (51) de la tension continue,
- des moyens de filtrage (131) connectés audit dispositif de conversion, et
- des seconds moyens de conversion (141) connectés aux moyens de filtrage,
**caractérisé en ce que** le dispositif de conversion est un dispositif selon l'une quelconque des revendications 1 à 7, fournissant une tension pulsée d'amplitude plus élevée que la tension continue (Vin), les moyens de filtrage étant connectés en sortie des moyens de superposition et de redressement (52) dudit dispositif de conversion (51).

9. Alimentation électrique sans interruption comprenant :
- des moyens de stockage (104) de l'énergie électrique, et
- un convertisseur (105) d'une tension continue (Vin) en tension alternative connecté aux moyens de stockage, ledit convertisseur comportant un dispositif de conversion (51) de la tension continue (Vin),
**caractérisé en ce que** le dispositif de conversion (51) de la tension continue est à un dispositif selon l'une quelconque des revendications 1 à 7, ledit dispositif étant utilisé pour convertir la tension continue fournie par lesdits moyens de stockage en tension pulsée d'amplitude plus élevée que la tension continue (Vin).

## Patentansprüche

1. Vorrichtung zum Umwandeln (51) einer Gleichspannung (Vin), umfassend:
- erste Umwandlungsmittel (2), um die Gleichspannung zu empfangen und um eine gepulste Primärspannung (V1) zu liefern, und
- Transformationsmittel (4), die an die ersten Umwandlungsmitteln angeschlossen sind, um eine gepulste Sekundärspannung (V2) zu liefern,
wobei die Vorrichtung Mittel zum Überlagern und zum Gleichrichten (52) der Primär- und Sekundärspannung umfasst, um eine gepulste und gleichgerichtete Ausgangsspannung (Vout1) zu liefern, wobei die Überlagerungs- und Gleichrichtmittel an die ersten Umwandlungsmittel und an den Ausgang der Transformationsmittel angeschlossen sind, **dadurch gekennzeichnet, dass**
die Ausgangsspannung (Vout1) Pulse umfasst, die Amplituden besitzen, die im Wesentlichen der Summe der Amplituden der Pulse der gepulsten Primärspannung (V1) und der gepulsten Sekundärspannung (V2) gleich sind.

2. Vorrichtung nach Anspruch 1, **dadurch gekennzeichnet, dass** wenigstens ein Leiter (53, 54) am Ausgang der ersten Umwandlungsmittel (2) an die Überlagerungs- und Gleichrichtmittel (52) angeschlossen ist.

3. Vorrichtung nach einem der Ansprüche 1 oder 2, **dadurch gekennzeichnet, dass** die ersten Umwandlungsmittel (2) Niederfrequenz- oder Hochfrequenz-Umwandlungsmittel sind.

4. Vorrichtung nach einem der Ansprüche 1 bis 3, **dadurch gekennzeichnet, dass** die Transformationsmittel (4) wenigstens eine Primärwicklung (5) enthalten, die an den Ausgang der ersten Umwandlungsmittel (2) angeschlossen ist, und wenigstens eine Sekundärwicklung (6), die an den Eingang der Überlagerungs- und Gleichrichtmittel (52) angeschlossen ist, wobei die Wicklungsrichtung der Primärwicklung des Transformators die gleiche ist wie jene der Sekundärwicklung.

5. Vorrichtung nach einem der Ansprüche 1 bis 4, **dadurch gekennzeichnet, dass** die ersten Umwandlungsmittel (2) zwei Schenkel (11, 12) mit Transistoren (T1, T2, T3 und T4) enthalten, an denen wenigstens zwei Transistoren in Reihe montiert sind, wobei der Mittelpunkt (13, 14) jedes Schenkels an den Eingang der Transformationsmittel (4) und an erste Eingänge der Überlagerungs- und Gleichrichtmittel (52) angeschlossen ist.

6. Vorrichtung nach einem der Ansprüche 1 bis 5, **dadurch gekennzeichnet, dass** die Überlagerungs- und Gleichrichtmittel (52) zwei Schenkel (61, 62) mit Dioden (D1, D2, D3 und D4) enthalten, wobei jeder Schenkel wenigstens zwei Dioden enthält, die in der gleichen Richtung in Reihe montiert sind, wobei der Mittelpunkt (63, 64) jedes Schenkels an den Ausgang der Transformationsmittel (4) angeschlossen ist.

7. Vorrichtung nach Anspruch 6, **dadurch gekennzeichnet, dass** die einlaufenden Enden jedes Schenkels an den Ausgang der ersten Umwandlungsmittel (2) angeschlossen sind.

8. Wandler (105) einer Gleichspannung (Vin) in Wechselspannung (Vout2), umfassend:
- eine Vorrichtung zum Umwandeln (51) der Gleichspannung,
- Filtermittel (131), die an die Umwandlungsvorrichtung angeschlossen sind, und
- zweite Umwandlungsmittel (141) die an die Filtermittel angeschlossen sind,
**dadurch gekennzeichnet, dass** die Umwandlungsvorrichtung eine Vorrichtung nach einem der Ansprüche 1 bis 7 ist, die eine gepulste Spannung von höherer Amplitude als der Gleichspannung (Vin) liefert, wobei die Filtermittel am Ausgang der Überlagerungs- und Gleichrichtmittel (52) der Umwandlungsvorrichtung (51) angeschlossen sind.

9. Unterbrechungsfreie Stromversorgung, umfassend:
- Mittel zum Speichern (104) der elektrischen Energie, und
- einen Wandler (105) einer Gleichspannung (Vin) in Wechselspannung, der an die Speichermittel angeschlossen ist, wobei der Wandler eine Vorrichtung zum Umwandeln (51) der Gleichspannung (Vin) enthält,
**dadurch gekennzeichnet, dass** die Vorrichtung zum Umwandeln (51) der Gleichspannung mit einer Vorrichtung nach einem der Ansprüche 1 bis 7 ist, wobei die Vorrichtung verwendet wird, um die von den Speichermitteln gelieferte Gleichspannung in gepulste Spannung von höherer Amplitude als der Gleichspannung (Vin) umzuwandeln.

## Claims

1. Device for converting (51) a direct current (Vin) comprising:
- first means for converting (2) to receive the direct current and to supply a pulsed primary voltage (V1), and
- means for transforming (4) connected to the first means for converting to supply a secondary pulsed voltage (V2),
the device comprising means for superimposing and rectifying (52) the primary and secondary voltages to supply a pulsed and rectified output voltage (Vout1), said means for superimposing and rectifying being connected to the first means for converting and to the output of the means for transforming, **characterised in that** said output voltage (Vout1) comprises pulses that have amplitudes substantially equal to the sum of the amplitudes of the pulses of the primary pulsed voltage (V1) and the secondary pulsed voltage (V2).

2. Device according to claim 1, **characterised in that** at least one conductor (53, 54) at the output of the first means for converting (2) is connected to the means for superimposing and rectifying (52).

3. Device according to one of claims 1 or 2, **characterised in that** the first means for converting (2) are low frequency or high frequency means for converting.

4. Device according to one of claims 1 to 3, **characterised in that** the means for transforming (4) comprise at least on primary winding (5) connected to the output of the first means for converting (2) and to at least one secondary winding (6) connected to the input of the means for superimposing and rectifying (52), the winding direction of the primary winding of the transformer being the same as that of the secondary winding.

5. Device according to one of claims 1 to 4, **characterised in that** the first means for converting (2) comprise two branches (11, 12) of transistors (T1, T2, T3 & T4) on which are mounted in series at least two transistors, the middle point (13, 14) of each branch being connected to the input of the means for transforming (4) and to the first inputs of the means for superimposing and rectifying (52).

6. Device according to one of claims 1 to 5, **characterised in that** the means for superimposing and rectifying (52) comprise two branches (61, 62) of diodes (D1, D2, D3 & D4), each branch comprising at least two diodes mounted in series in the same direction, the middle point (63, 64) of each branch being connected to the output of the means for transforming (4).

7. Device according to claim 6, **characterised in that** the entering ends of each branch are connected to the output of the first means for converting (2).

8. Converter (105) of a direct current (Vin) into alternating current (Vout2) comprising:
- a device for converting (51) the direct current,
- means for filtering (131) connected to said device for converting, and
- second means for converting (141) connected to the means for filtering,
**characterised in that** the device for converting is a device according to any one of claims 1 to 7, supplying a pulsed voltage with amplitude higher than the direct current (Vin), the means for filtering being connected at the output of the means for superimposing and rectifying (52) said device for converting (51).

9. Uninterruptible electrical power supply comprising:
- means for storing (104) electrical energy, and
- a converter (105) of direct current (Vin) into alternating current connected to the means for storing, said converter comprising a device for converting (51) the direct current (Vin),
**characterised in that** the device for converting (51) the direct current is a device according to any one of claims 1 to 7, said device being used to convert the direct current supplied by said means for storing into pulsed voltage with amplitude higher than the direct current (Vin).
